(19) 

**Europäisches Patentamt**
**European Patent Office**
**Office européen des brevets**

(11) **EP 3 142 024 A1**

(12) **EUROPEAN PATENT APPLICATION**

(43) Date of publication:
**15.03.2017 Bulletin 2017/11**

(51) Int Cl.:
***G06F 17/30*** *(2006.01)*

(21) Application number: **16185063.1**

(22) Date of filing: **22.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.09.2015 TW 104129738**

(71) Applicant: **Synology Incorporated**
**Taipei 103 (TW)**

(72) Inventors:
• **Wu, Tung-Ying**
  **710 Tainan City (TW)**
• **Chu, Bie-I**
  **320 Taoyuan City (TW)**

(74) Representative: **Becker Kurig Straus**
**Patentanwälte**
**Bavariastrasse 7**
**80336 München (DE)**

(54) **METHOD AND APPARATUS FOR PERFORMING VERSION MANAGEMENT ON STORAGE SYSTEM**

(57) A method (200) for performing version management on a storage system and an associated apparatus are provided. The method includes the steps of: according to at least one rule, determining importance of a plurality of versions of a file in the storage system, respectively, in which importance of a specific version of the plurality of versions and a time difference between a next version of the specific version and specific any version have a positive correlation, and the importance of the specific version and a time difference between a latest version of the file and the specific version have a negative correlation (210); and deleting one or more versions corresponding to least importance within the plurality of versions (220).

FIG. 4

## Description

The present invention relates to automatic management operations of a data storage system, and more particularly, to a method and apparatus for performing version management on a storage system.

In a storage system for performing version control, when the total version number exceeds an upper limit, some versions must be deleted. Some version management methods may place priority on deleting earlier versions until the total version number no longer exceeds the upper limit. When new versions are created more often, the earlier versions will need to be deleted more quickly, resulting in the creation time of versions being non-uniformly distributed. Another version management method performs deletions according to predetermined times, in which different upper bounds are used for different predetermined times (e.g. in one day, reserving one version each hour at most; in one month, reserving one version at most each day; and in one month, reserving one version at most each week). The user may be forced to set different upper limits for multiple periods, however. Further, if the number of versions created in a first period exceeds the upper limit of the first period, the latest created version may be deleted. The method of calculating the time periods may result in an undesired deletion result. If the time of the latest version (e.g. the current time) is viewed as a reference for calculating periods, the distribution of creation times of the reserved versions may be undesirable. Assuming that one version at most is reserved in one day, under a situation where the reference is "2015/4/21, 00:00", the creation time of the version "2015/4/19, 11:00" and the creation time of the version "2015/4/18, 15:00" will be within the first day to the second day and the second day to the third day, respectively. If, however, the aforementioned reference is "2015/4/21, 12:00", both versions will fall in the second day to the third day, meaning one of the two versions will be deleted.

As related art techniques cannot provide an appropriate service for users without introducing unwanted side effects, there is a need for a novel method and scheme which can solve the above issue.

This in mind, the application aims at providing a method and apparatus in order to solve the abovementioned problems.

This is achieved by a method for performing version management and associated device according to claims 1 and 8. The dependent claims pertain to corresponding further developments and improvements.

As will be seen more clearly from the detailed description following below, the claimed method includes: according to at least one rule, determining importance of a plurality of versions of a file in the storage system, respectively, in which importance of a specific version within the plurality of versions and a time difference between a next version of the specific version and the specific version are positively correlated, and the importance of the specific version and a time difference between a latest version of the file and the specific version and are negatively correlated, in which the specific version is any of the plurality of versions; and deleting one or more versions corresponding to least importance within the plurality of versions.

In addition, the claimed apparatus includes an interface circuit and a processing circuit. The interface circuit is arranged to couple to at least one storage of the storage system, in which the storage is arranged to store a plurality of files in the storage system. The processing circuit is coupled to the interface circuit, the processing circuit arranged to control operations of the storage system. The processing circuit determines importance of a plurality of versions of a file in the storage system according to at least one rule, respectively. Importance of a specific version within the plurality of versions and a time difference between a next version of the specific version and the specific version are positively correlated, and the importance of the specific version and a time difference between a latest version of the file and the specific version are negatively correlated, in which the specific version is any of the plurality of versions. The processing circuit deletes one or more versions corresponding to least importance within the plurality of versions.

In the following, the invention is further illustrated by way of example, taking reference to the accompanying drawings. Thereof:

Fig. 1    is a diagram illustrating an apparatus for performing version management on a storage system according to an embodiment of the present invention;

Fig. 2    is a diagram illustrating a version management characteristic curve of the apparatus shown in Fig. 1 according to an embodiment of the present invention;

Fig. 3    is a diagram illustrating a version distribution of the version management characteristic curve shown in Fig. 2 according to an embodiment of the present invention;

Fig. 4    is a flowchart illustrating a method for performing version management on a storage system according to an embodiment of the present invention;

Fig. 5    is a diagram illustrating a flow of the method shown in Fig. 4 according to an embodiment of the present invention;

Fig. 6    is a diagram illustrating a set of versions of the method shown in Fig. 4 according to an embodiment of the present invention;

Fig. 7    is a diagram illustrating a deletion order of the embodiment shown of Fig. 6;

Fig. 8    is a diagram illustrating a set of versions and the deletion result thereof of the method shown in Fig. 4 according

Fig. 9     is a diagram illustrating a set of versions and the deletion result thereof of the method shown in Fig. 4 according to yet another embodiment of the present invention; and

Fig. 10    is a diagram illustrating a set of versions and the deletion result thereof of the method shown in Fig. 4 according to still another embodiment of the present invention.

Detailed Description

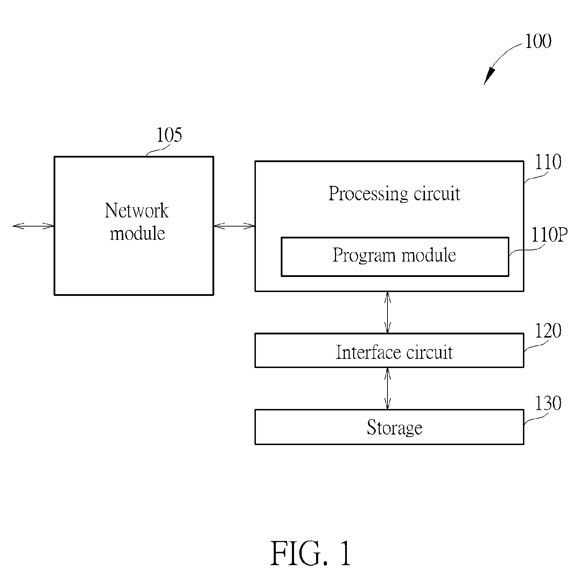

Fig. 1 is a diagram illustrating an apparatus 100 for performing version management on a storage system according to an embodiment of the present invention. The apparatus 100 includes at least a portion (e.g. part or all) of the storage system. The apparatus 100 may include a portion of the storage system, and more particularly, the apparatus 100 is arranged to control the circuit of the storage system. In another example, the apparatus 100 may include the whole storage system. Examples of the storage system 100 may include (but are not limited to): a server or a network attached storage (NAS).

As shown in Fig. 1, the apparatus 100 may include a network module 105, a processing circuit 110 and an interface circuit 120. The apparatus 100 may further include at least one storage (e.g. one or more storages), represented by the storage 130. The processing circuit 110 may control operations of the storage system, and may be an example of utilizing a circuit to control the storage system. Further, the network module 105 may be arranged to provide a network service for the storage system, and the interface circuit 120 may be arranged to couple to the storage of the storage system (e.g. the storage 130), in which the storage may be arranged to store a plurality of files in the storage system. Examples of the storage may include (but are not limited to): solid state drives (SSDs) or hard disk drives (HDDs).

In practice, the processing circuit 110 may perform a program module 110P to control the storage system, and the program module 110P may be obtained from inside or outside the processing circuit 110. Examples of the program module 110P may include (but are not limited to): software codes or firmware codes. In some embodiments, the processing circuit 110 may be implemented with an application-specific integrated circuit (ASIC), in which the program module 110P may represent a program module built in the ASIC.

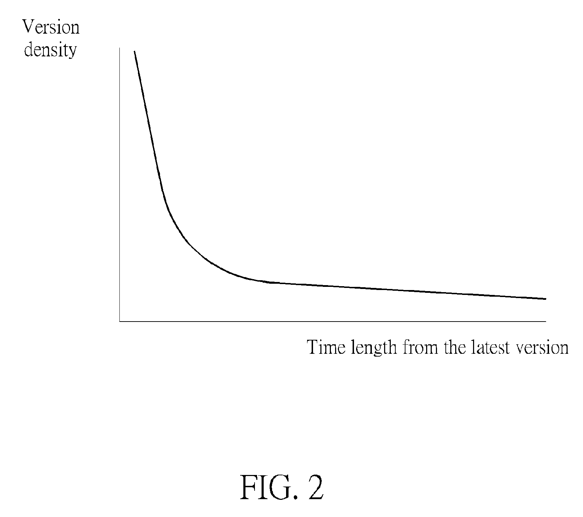

Fig. 2 is a diagram illustrating a version management characteristic curve of the apparatus 100 shown in Fig. 1 according to an embodiment of the present invention. The processing circuit 110 for executing the program module 110P may refer to the creation time of multiple versions to determine which versions should be deleted. This makes the version density decrease in response to the increasing of the time length from the latest version, such as that shown in the curve of Fig. 2. Hence, the apparatus 100 may effectively improve the efficiency of automatic management operations, without wasting storage space or incorrectly deleting some versions.

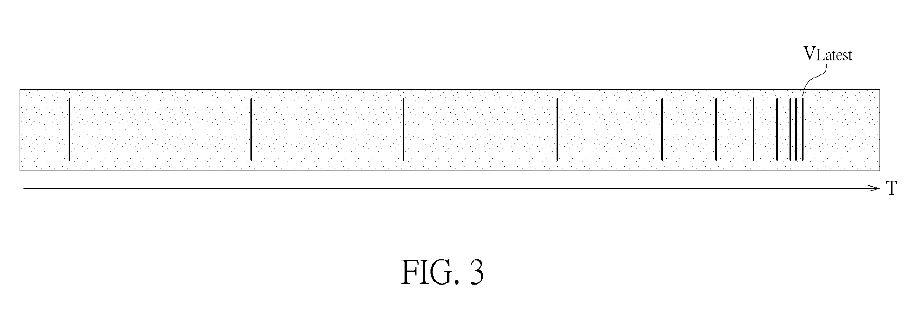

Fig. 3 is a diagram illustrating a version distribution of the version management characteristic curve shown in Fig. 2 according to an embodiment of the present invention. The horizontal axis shown in the bottommost of Fig. 3 is the time axis, the notation T represents time, and the notation "$V_{Latest}$" represents the latest version. For example, the automatic management operations of the apparatus 100 may delete a portion of versions within the aforementioned versions. Further, the series of straight lines except for the straight line $V_{Latest}$ represent non-deleted versions. In this embodiment, the version density of the series of non-deleted versions decreases with the increasing of the time length from the latest version $V_{Latest}$, as shown in the version management characteristic curve shown in Fig. 2. In some embodiments, the version distribution may be modified.

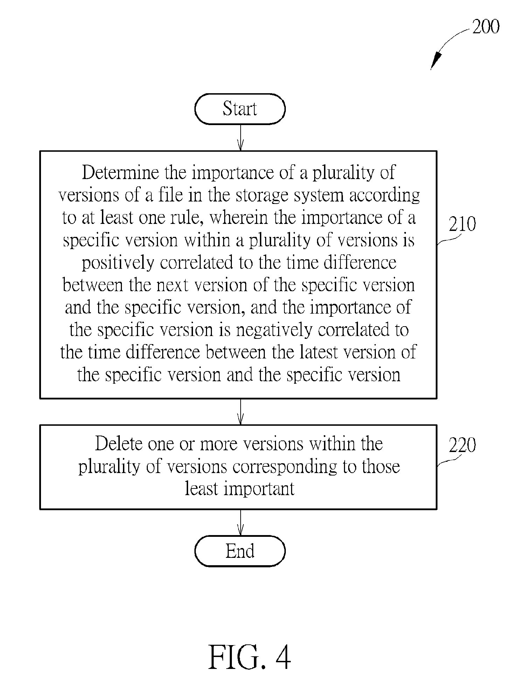

Fig. 4 is a flowchart illustrating a method 200 for performing version management on a storage system according to an embodiment of the present invention. The method may be applied to the apparatus 100 shown in Fig. 1, and more particularly, the aforementioned processing circuit 110. The method is described as follows.

In Step 210, the processing circuit 110 determines the importance of a plurality of versions of a file in the storage system according to at least one rule, in which the importance of a specific version within a plurality of versions is positively correlated to the time difference between the next version of the specific version and the specific version, and the importance of the specific version is negatively correlated to the time difference between the latest version and the specific version, in which the specific version can be any version of the plurality of versions. For example, the latest version is not within the plurality of versions.

In Step 220, the processing circuit 110 deletes one or more versions within the plurality of versions corresponding to those least important. For example, the processing circuit 110 may compare the importance of at least two versions within the plurality of versions, in order to select and delete the one or more versions corresponding to least importance from the plurality of versions.

For better understanding, the aforementioned latest version $V_{Latest}$ may be an example of the latest version mentioned in Step 210. Hence, the version density will decrease in response to the increasing of the time length from the latest version $V_{Latest}$, in which the version distribution shown in Fig. 3 may be an example of the version distribution after the method 200 is implemented.

According to some embodiments, the aforementioned rule may make the importance of the specific version positively correlated to the time difference between the creation time of the next version (i.e. the version next to the specific version) and the creation time of the specific version and make the importance of the specific version negatively correlated to the time difference between the creation time of the latest version and the creation time of the specific version For example, the processing circuit 110 may calculate a plurality of importance parameters respectively corresponding to the plurality of versions according to a specific equation, and utilize the plurality of importance parameters to represent the importance of the plurality of versions, respectively, in which the specific equation indicates that the importance parameter of the specific version is positively correlated to the time difference between the creation time of the next version (i.e. the version next to the specific version) and the creation time of the specific version, and indicates that the importance parameter of the specific version is negatively correlated to the time difference between the creation time of the latest version and the creation time of the specific version.

According to some embodiments, the specific equation may indicate that the importance parameter of the specific version is a rational function of the creation time of the specific version, the creation time of the next version of the specific version, and the creation time of the latest version. The specific equation is shown as follows, in which the version $V_i$ represents the specific version, the index i is a positive integer, the symbol "$P_i$" represents the importance parameter of the version $V_i$, and the symbol "$Time(V_i)$" represents the creation time of the version $V_i$.

$$P_i = f(Time(V_i), Time(V_{i+1})) / g(Time(V_i), Time(V_{Latest}));$$

Under the situation where the version $V_i$ represents the specific version, the version $V_{i+1}$ represents the next version of the specific version. For example, $f(Time(V_i), Time(V_{i+1}))$ may be positively correlated to $(Time(V_{i+1}) - Time(V_i))$, and $g(Time(V_i), Time(V_{Latest}))$ may be positively correlated to $(Time(V_{Latest}) - Time(V_i))$. Hence, the importance parameter $P_i$ is positively correlated to $(Time(V_{i+1}) - Time(V_i))$, and the importance parameter $P_i$ is negatively correlated to $(Time(V_{Latest}) - Time(V_i))$.

Based on the method 200, the apparatus 100 may effectively improve the efficiency of automatic management operations, and will not waste storage space or unnecessarily delete some versions.

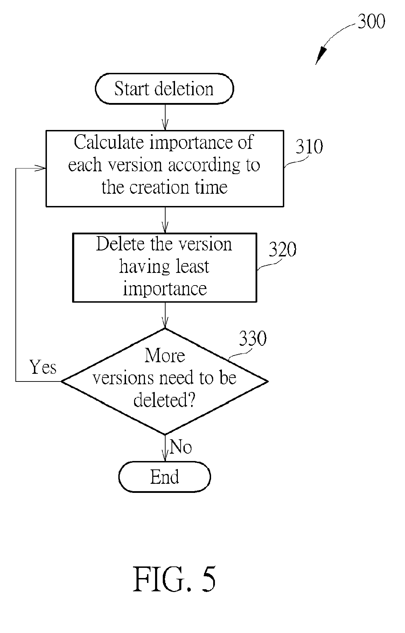

Fig. 5 is a diagram illustrating a flow 300 of the method 200 shown in Fig. 4 according to an embodiment of the present invention.

In Step 310, the processing circuit 110 may calculate importance of each version (e.g. the importance of the plurality of versions mentioned in Step 210) according to the creation time.

In Step 320, the processing circuit 110 may delete the version having least importance, such as the one or more versions corresponding to least importance mentioned in Step 220.

In Step 330, the processing circuit 110 may check whether there is still any version which needs to be deleted. If yes, the method proceeds to Step 310; otherwise, the flow 300 ends.

The version IDs {v1, v2, v3, v4, v5, v6, v7, v8, v9, v10, v11} shown in the first column of Table 1 represent the eleven versions {$V_1$, $V_2$, $V_3$, $V_4$, $V_5$, $V_6$, $V_7$, $V_8$, $V_9$, $V_{10}$, $V_{11}$}, respectively, in which the first ten versions {$V_1$, $V_2$, $V_3$, $V_4$, $V_5$, $V_6$, $V_7$, $V_8$, $V_9$, $V_{10}$} may be an example of the plurality of versions, and the last version $V_{11}$ may be an example of the latest version $V_{Latest}$.

Table 1

| Version ID | Version time (sec) | Time length i from the latest version (sec) |
| --- | --- | --- |
| v1 | 1431560000 | 9996 |
| v2 | 1431561366 | 8630 |
| v3 | 1431563629 | 6367 |
| v4 | 1431563733 | 6263 |
| v5 | 1431565028 | 4968 |
| v6 | 1431565921 | 4075 |
| v7 | 1431566178 | 3818 |
| v8 | 1431568628 | 1368 |
| v9 | 1431569224 | 772 |
| v10 | 1431569446 | 550 |
| v11 | 1431569996 | 0 |

The versions shown in the second column of Table 1 are described based on the time "1970/1/1, 00:00" (the value thereof may be viewed as 0 seconds). Further, for a specific version, each of the time lengths shown in the third column represents the absolute value of the time difference between the creation time of the latest version $V_{Latest}$ and the creation time of the specific version In this embodiment, since the version $V_{11}$ represented by the version ID v11 may be an example of the latest version $V_{Latest}$, the value shown in the bottom-right grid of Table 1 is 0.

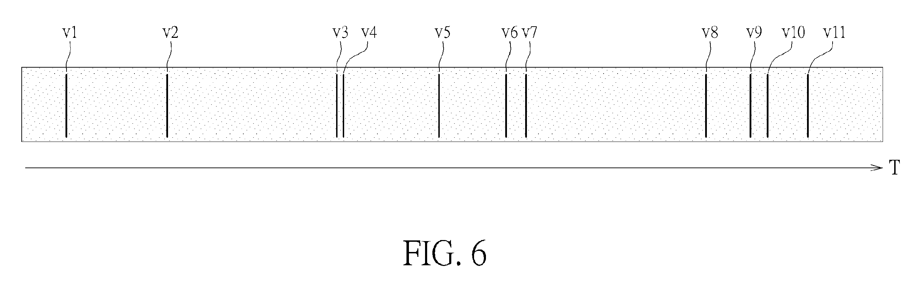

Fig. 6 is a diagram illustrating a set of versions of the method 200 shown in Fig. 4 according to an embodiment of the present invention, such as the aforementioned eleven versions $\{V_1, V_2, V_3, V_4, V_5, V_6, V_7, V_8, V_9, V_{10}, V_{11}\}$ represented by the version IDs {v1, v2, v3, v4, v5, v6, v7, v8, v9, v10, v11}, respectively. According to this embodiment, the denominator $g(Time(V_i), Time(V_{Latest}))$ of the rational function may include the time difference between the creation time of the latest version and the creation time of the specific version. Further, the numerator $f(Time(V_i), Time(V_{i+1}))$ of the rational function may include the time difference between the creation time of the next version of the specific version and the creation time of the specific version. The specific equation is as follows:

$$P_i = (Time(V_{i+1}) - Time(V_i)) / (Time(V_{Latest}) - Time(V_i));$$

in which each of the versions $\{V_1, V_2, V_3, V_4, V_5, V_6, V_7, V_8, V_9, V_{10}\}$ may be an example of the version $V_i$.

The importance parameter of the version $V_3$ (such as $P_i$; i = 3) may be expressed as follows:

$$P_3 = (Time(V_4) - Time(V_3)) / (Time(V_{11}) - Time(V_3))$$

$$= (1431563733 - 1431563629) / (1431569996 - 1431563629)$$

$$= (6367 - 6263) / 6367$$

$$= 0.0163\ldots$$

$$\cong 0.016;$$

In another example, the importance parameter of the version $V_2$ (such as $P_i$; i = 2) may be expressed as follows:

$$P_2 = (Time(V_3) - Time(V_2)) / (Time(V_{11}) - Time(V_2))$$

$$= (1431563629 - 1431561366) / (1431569996 - 1431561366)$$

$$= (8630 - 6367) / 8630$$

$$= 0.2622\ldots$$

$$\cong 0.262;$$

As the remaining importance parameters can be obtained by following the above concept, they are omitted here for brevity.

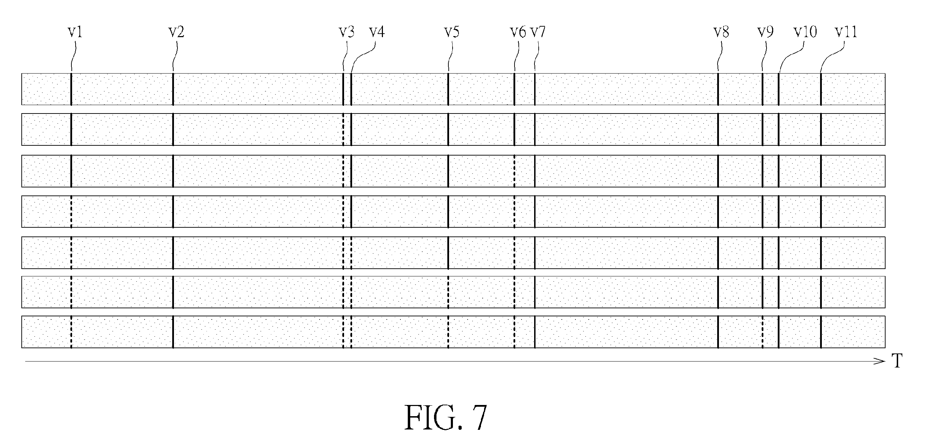

Fig. 7 is a diagram illustrating a deletion order of the embodiment shown of Fig. 6, in which the dotted vertical lines represent deleted versions. From top to bottom in Fig. 7, the processing circuit 110 may refer to importance parameters of the first 10 versions $\{V_1, V_2, V_3, V_4, V_5, V_6, V_7, V_8, V_9, V_{10}\}$ (represented by the version IDs {v1, v2, v3, v4, v5, v6, v7, v8, v9, v10}, respectively), to delete the one or more versions corresponding to least importance mentioned in Step 220. In an embodiment, if the number of remaining versions is still larger than the version number upper limit, the processing circuit 110 may refer to Steps 210 and 220 in order to calculate importance parameters of the remaining versions again, and delete the versions within the remaining versions corresponding to least importance, until the version number does not exceed the version number upper limit. For example, only the versions $\{V_2, V_7, V_8, V_{10}, V_{11}\}$ remain in Fig. 7.

For better understanding, the versions defined in Table 1 may be viewed as an example of the version $\{V_i\}$. In some embodiments, the definition of the version $\{V_i\}$ is not limited by Table 1.

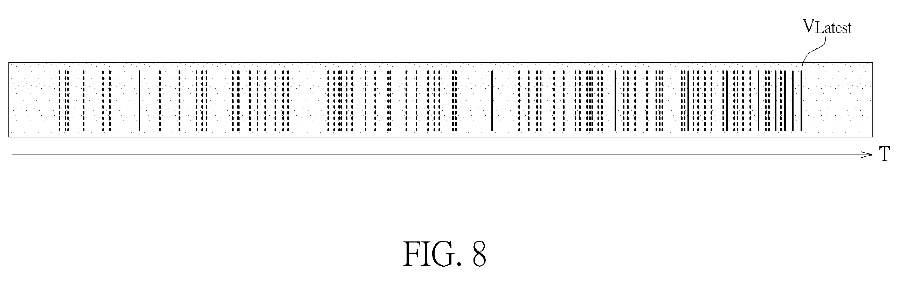

Fig. 8 is a diagram illustrating a set of versions and the deletion result thereof of the method 200 shown in Fig. 4 according to another embodiment of the present invention, in which the dotted vertical lines represent the deleted versions. In this embodiment, the specific equation may be identical to the exemplary specific equation mentioned in the embodiment shown in Fig. 6, and may be expressed as follows:

$$P_i = (Time(V_{i+1}) - Time(V_i)) / (Time(V_{Latest}) - Time(V_i));$$

The number of sets of versions in this embodiment is much larger than that mentioned in the embodiment shown in Fig. 6. Hence, the distribution of non-deleted versions shown in Fig. 8 may approximate to the version distribution shown in Fig. 3.

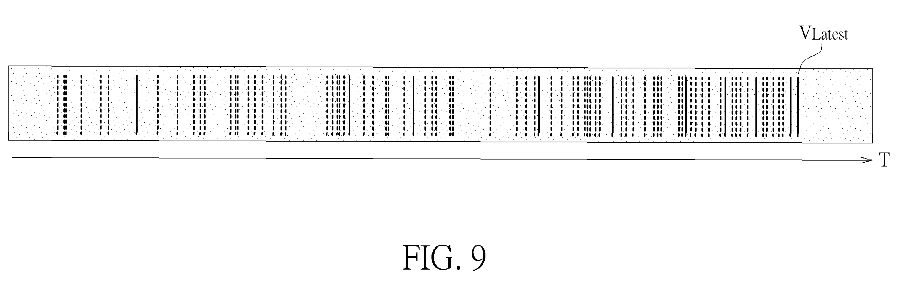

Fig. 9 is a diagram illustrating a set of versions and the deletion result thereof of the method 200 shown in Fig. 4 according to yet another embodiment of the present invention, in which the dotted vertical lines represent deleted versions. According to this embodiment, the denominator $g(Time(V_i), Time(V_{Latest}))$ of the rational function may include the time difference between the creation time of the latest version and the creation time of the specific version (especially the square thereof). Further, the numerator $f(Time(V_i), Time(V_{i+1}))$ of the rational function may include the time difference between the creation time of the next version and the creation time of the specific version. The specific equation may be expressed as follows:

$$P_i = (Time(V_{i+1}) - Time(V_i))^2 / (Time(V_{Latest}) - Time(V_i));$$

Some features of this embodiment which are similar to those in the aforementioned embodiments/modifications are omitted here for brevity.

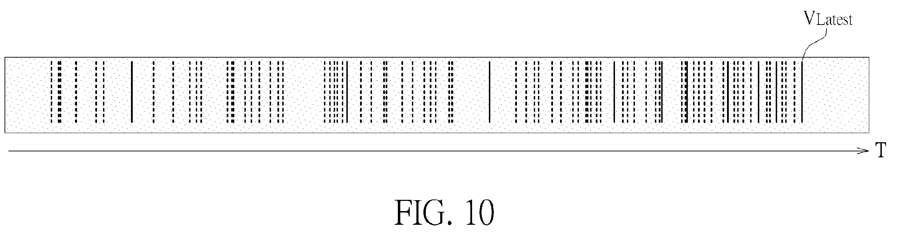

Fig. 10 is a diagram illustrating a set of versions and the deletion result thereof of the method 200 shown in Fig. 4 according to still another embodiment of the present invention, in which the dotted vertical lines represent deleted versions. According to this embodiment, the denominator $g(Time(V_i), Time(V_{Latest}))$ of the rational function may include the difference between the creation time of the latest version and the creation time of the specific version, and may further include an offset OFFSET for adjusting the distribution of non-deleted versions within the plurality of versions. Further, the numerator $f(Time(V_i), Time(V_{i+1}))$ of the rational function may include the time difference between the creation time of the next version of the specific version and the creation time of the specific version. The specific equation may be expressed as follows:

$$P_i = (Time(V_{i+1}) - Time(V_i)) / (Time(V_{Latest}) - Time(V_i) + OFFSET);$$

The offset OFFSET may be equal to $((Time(V_{Latest}) - Time(V_1)) / 10)$ or any other value. Some features in this embodiment similar to those in the aforementioned embodiments/modifications are omitted here for brevity.

According to some embodiments, the denominator $g(Time(V_i), Time(V_{Latest}))$ of the rational function may include the time difference between the creation time of the latest version and the creation time of the specific version, and may further include an offset c2 for adjusting the distribution of non-deleted versions within the plurality of versions. Further, the numerator $f(Time(V_i), Time(V_{i+1}))$ of the rational function may include the time difference between the creation time of the next version of the specific version and the creation time of the specific version, and may further include an offset c1 for adjusting the distribution of non-deleted versions within the plurality of versions. The specific equation may be expressed as follows:

$$P_i = (Time(V_{i+1}) - Time(V_i) + c1)^n / (Time(V_{Latest}) - Time(V_i) + c2)^m;$$

Any of the symbols "n" and "m" may represent a positive value, and m may be either equal to n, or not equal to n. Some features in this embodiment which are similar to those in the aforementioned embodiments/modifications are omitted here for brevity.

Note that, under the situation where n = 1, m = 1, c1 = 0 and c2 = 0, the above equation may be identical to the specific equation of the embodiment shown in Fig. 6. This embodiment may further achieve different effects through adjusting one or more parameters of {n, m, c1, c2}. For example, the processing circuit 110 may adjust the offset c1 to be larger than 0, in which if the version time of a version is close to that of a previous version, this version may possibly be reserved. According to some embodiments, the processing circuit 110 may adjust the offset c2 to be larger than 0, in which if the version time of a version is close to that of the latest version, this version may possibly be deleted. Further, according to some embodiments, the processing circuit 110 may adjust n to be larger than 1, in order to raise the influence of the time difference between one version and a previous version of this version on the importance. Moreover, according to some embodiments, the processing circuit 110 may adjust m to be larger than 1, to raise the influence of the time difference between one version and the latest version on the importance. Some features in this embodiment which are similar to those in the aforementioned embodiments/modifications are omitted here for brevity.

**Claims**

1. A method (200) for performing version management on a storage system, the method **characterized by**:

   according to at least one rule, determining importance of a plurality of versions of a file in the storage system, respectively, wherein importance of a specific version within the plurality of versions and a time difference between a next version of the specific version and the specific version are positively correlated, and the importance of the specific version and a time difference between a latest version of the file and the specific version are negatively correlated, wherein the specific version is any of the plurality of versions (210); and deleting one or more versions corresponding to least importance within the plurality of versions (220).

2. The method of claim 1, **characterized in that** the rule makes the importance of the specific version and a difference between creation time of the next version of the specific version and creation time of the specific version positively correlated, and makes the importance of the specific version and a difference between creation time of the latest version of the file and creation time of the specific version negatively correlated.

3. The method of claim 2, **characterized in that** the step of determining the importance of the plurality of versions of the file in the storage system respectively according to the rule further comprises:

   according to a specific equation, calculating a plurality of importance parameters respectively corresponding to the plurality of versions, and utilizing the plurality of importance parameters to respectively represent the importance of the plurality of versions, wherein the specific equation indicates that an importance parameter of the specific version and the time difference between the next version of the specific version and the creation time of the specific version are positively correlated, and indicates that the importance parameter of the specific version and the time difference between the creation time of the latest version and the creation time of the specific version are negatively correlated.

4. The method of claim 1, **characterized in that** the method further comprises: comparing importance of at least two versions within the plurality of versions, to select and delete one or more versions corresponding to least importance within the plurality of versions.

5. The method of claim 1, **characterized in that** the latest version is not within the plurality of versions.

6. An apparatus for performing version management on a storage system, the apparatus comprising at least a portion of the storage system, the apparatus, **characterized by**:

   an interface circuit, arranged to couple to at least one storage of the storage system, wherein the storage is arranged to store a plurality of files in the storage system; and a processing circuit, coupled to the interface circuit, the processing circuit arranged to control operations of the storage system, wherein the processing circuit determines importance of a plurality of versions of a file in the storage system according to at least one rule, respectively; importance of a specific version within the plurality of versions and a time difference between a next version of the specific version and the specific version are positively correlated, and the importance of the specific version and a time difference between a latest version of the file and the specific version are negatively correlated, wherein the specific version is any of the plurality of versions; and the processing circuit deletes one or more versions corresponding to least importance within the plurality of versions.

7. The apparatus of claim 6, **characterized in that** the rule makes importance of the specific version and a difference between creation time of the next version of the specific version and the specific version positively correlated, and makes the importance of the specific version and a difference between creation time of the latest version of the file and creation time of the specific version negatively correlated.

8. The apparatus of claim 7, **characterized in that** the processing circuit refers to a specific equation to calculate a plurality of importance parameters corresponding to the plurality of versions, respectively, and utilizing the plurality of importance parameters to represent the importance of the plurality of versions, respectively, wherein the specific equation indicates that an importance parameter of the specific version and the time difference between the creation time of the next version of the specific version and the creation time of the specific version and are positively correlated, and indicates that the importance parameter of the specific version and the time difference between the creation time of the latest version and the creation time of the specific version are negatively correlated.

9. The apparatus of claim 6, **characterized in that** the processing circuit compares importance of at least two versions within the plurality of versions, to select and delete one or more versions corresponding to least importance within the plurality of versions.

10. The apparatus of claim 6, **characterized in that** the latest version is not within the plurality of versions.

11. The method of claim 3 or the apparatus of claim 8, **characterized in that** the specific equation indicates that the importance parameter of the specific version is a rational function of the creation time of the specific version, the next version of the specific version and the latest version.

12. The method of claim 11 or the apparatus of claim 11, **characterized in that** a denominator of the rational function comprises the time difference between the creation time of the latest version and the creation time of the specific version.

13. The method of claim 12 or the apparatus of claim 12, **characterized in that** the denominator of the rational function further comprises an offset for adjusting a distribution of non-deleted versions within the plurality of versions.

14. The method of claim 11 or the apparatus of claim 11, **characterized in that** a numerator of the rational function comprises the time difference between the creation time of the specific version and the creation time of the next version of the specific version.

15. The method of claim 14 or the apparatus of claim 14, **characterized in that** the numerator of the rational function further comprises an offset, for adjusting a distribution of non-deleted versions within the plurality of versions.

100

105

110

Network module

Processing circuit

110P

Program module

120

Interface circuit

130

Storage

FIG. 1

Version
density

Time length from the latest version

FIG. 2

$V_{Latest}$

T

FIG. 3

200

Start

Determine the importance of a plurality of versions of a file in the storage system according to at least one rule, wherein the importance of a specific version within a plurality of versions is positively correlated to the time difference between the next version of the specific version and the specific version, and the importance of the specific version is negatively correlated to the time difference between the latest version of the specific version and the specific version

210

Delete one or more versions within the plurality of versions corresponding to those least important

220

End

FIG. 4

*300*

```
        ┌─────────────────┐
        │  Start deletion │
        └─────────────────┘
                 │
                 ▼
   ┌────────────────────────────┐
   │  Calculate importance of   │   310
   │  each version according to │
   │     the creation time      │
   └────────────────────────────┘
                 │
                 ▼
   ┌────────────────────────────┐
   │   Delete the version       │   320
   │     having least           │
   │      importance            │
   └────────────────────────────┘
                 │
                 ▼
              /\      330
      Yes   /    \  More
      ◄────/ versions need to be \
           \   deleted?   /
             \          /
               \      /
                 \  /
                  │ No
                  ▼
        ┌─────────────────┐
        │      End        │
        └─────────────────┘
```

FIG. 5

v1  v2  v3 v4  v5  v6 v7  v8  v9  v10  v11

T

FIG. 6

EP 3 142 024 A1

FIG. 7

$V_{Latest}$

T

FIG. 8

FIG. 9

FIG. 10

EP 3 142 024 A1

Europäisches
Patentamt

European
Patent Office

Office européen
des brevets

## EUROPEAN SEARCH REPORT

Application Number

EP 16 18 5063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/095456 A1 (PIDDUCK PATRICK SIDNEY THOMAS [CA]) 3 April 2014 (2014-04-03) * paragraph [0047] - paragraph [0069]; figures 5A-E, 6, 7 * * paragraph [0014] - paragraph [0017] * ----- | 1-15 | INV. G06F17/30 |
| X | US 2014/372490 A1 (BARRUS FRANK [US] ET AL) 18 December 2014 (2014-12-18) * paragraph [0009] - paragraph [0010] * ----- | 1-15 | |

TECHNICAL FIELDS
SEARCHED (IPC)

G06F

The present search report has been drawn up for all claims

| Place of search | Date of completion of the search | Examiner |
|---|---|---|
| Munich | 13 January 2017 | Frank, Korbinian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                          
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 18 5063

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2017

| Patent document cited in search report | | Publication date | Patent family member(s) | | Publication date |
|---|---|---|---|---|---|
| US 2014095456 | A1 | 03-04-2014 | US | 2014095456 A1 | 03-04-2014 |
|  |  |  | US | 2016259799 A1 | 08-09-2016 |
| US 2014372490 | A1 | 18-12-2014 | EP | 3008647 A1 | 20-04-2016 |
|  |  |  | JP | 2016526717 A | 05-09-2016 |
|  |  |  | US | 2014372490 A1 | 18-12-2014 |
|  |  |  | WO | 2014201270 A1 | 18-12-2014 |

EPO FORM P0459

For more details about this annex : see Official Journal of the European Patent Office, No. 12/82